# EUROPEAN PATENT SPECIFICATION

(11) **EP 2 760 110 B1**
(45) Date of publication and mention of the grant of the patent: **01.05.2019**
(21) Application number: 14000230.4
(22) Date of filing: 23.01.2014
(51) Int. Cl.: H02K 1/18, H02K 9/02

(54) **Cooling assembly of an electric motor with a centric stator**
Kühlanordnung eines Elektromotors mit zentrischem Stator
Ensemble de refroidissement de moteur électrique comportant un stator centré

(30) Priority: 24.01.2013 SI 201300016
(43) Date of publication of application: 30.07.2014
(73) Proprietor: Kocevar, Joze, 3313 Polzela (SI)
(72) Inventor: Kocevar, Joze, 3313 Polzela (SI)
(74) Representative: Golmajer Zima, Marjanca

(56) References cited:
- EP-A2- 0 104 450
- US-A1- 2009 230 694
- US-A1- 2012 299 408

## Description

### Object of Invention

The object of the invention is a cooling assembly of an electric motor with a centric stator, wherein such motor is preferably intended for planes and vehicles driven by an electric motor.

### Technical Problem

The technical problem solved by the present invention is how to design such a cooling assembly of an electric motor with a centric stator that would have as small dimensions as possible, especially those of the diameter of the electric motor.

### Prior Art

Solutions with a centrifugal blower in the centre of a stator shaft are known. A problem of such electric motors is their large outer diameter. As a blower is arranged in the shaft it has a small diameter, which results in a limited cooling power and consequently highest power of the electric motor.

EP 0104450 A2 (Nippon Denso Co) describes a flat electric rotary machine in which a suppression of a rise in the temperature of the armature coil is achieved through air cooling relying on forced circulation of air through a multiplicity of slits, which are arranged radially and each interposed between a multiplicity of flat armature coil segments arranged radially, a plurality of gaps defined between inner and outer peripheral edges of the armature coil and annular armature coil fixing members respectively when the armature coil is secured at its inner and outer peripheral edges to the annular armature coil fixing members so that the gaps are located at the radially opposite ends of the armature coil, and a plurality of resilient members interposed between the inner and outer peripheral edges of the armature coil and the annular armature coil fixing members respectively for supporting the armature coil.

US2009/0230694 A1 (Yoshida et al) describes cooling of an axial gap type electric motor disposed in a housing and having an inner and an outer rotors and a stator placed between said rotors. The outer rotor is provided with cooling fins which displace in a circumferential direction when a rotary shaft of the electric motor is rotated. Said cooling fins displace a part of the intake air (outside air flow) to flow out in the outer peripheral direction of the outer rotor, cools an outer peripheral site of the outer rotor, an outer peripheral site of the stator and an outer peripheral site of the inner rotor. A part of the intake air (inner air flow) passes through air vents in the outer rotor, flows into an interior of the axial gap type motor and flows out in the outer peripheral direction of the stator through an axial gap between the outer rotor and the stator as well as through an axial gap between the stator and the inner rotor.

So there is a need for a different design of a cooling assembly in an electric motor of this type which will have sufficient cooling power and will not require a large outer diameter of the electric motor and cause a reduction in its operating performance.

### Solution to the Technical Problem

The described technical problem is solved by the invention as defined by the claims, the characteristic of which resides in the fact that pressurized cooling air is blown through a hollow shaft of a stator and further through a perforation in the shaft, then between individual coil windings and exits from the motor.

The invention will now be explained in more detail by way of embodiments and reference to the enclosed drawings, in which:

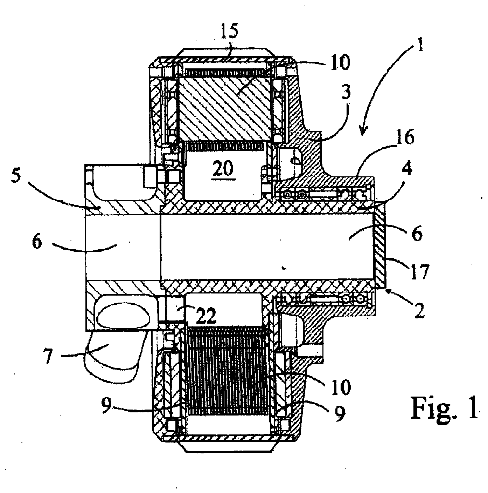

Fig. 1 shows an axial section of a device according to the first embodiment;

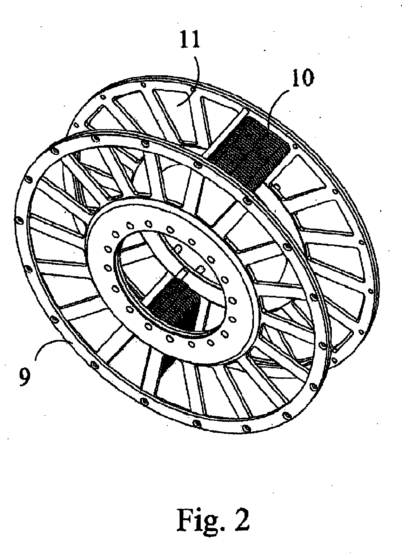

Fig. 2 shows a perspective view of coil supports with coils;

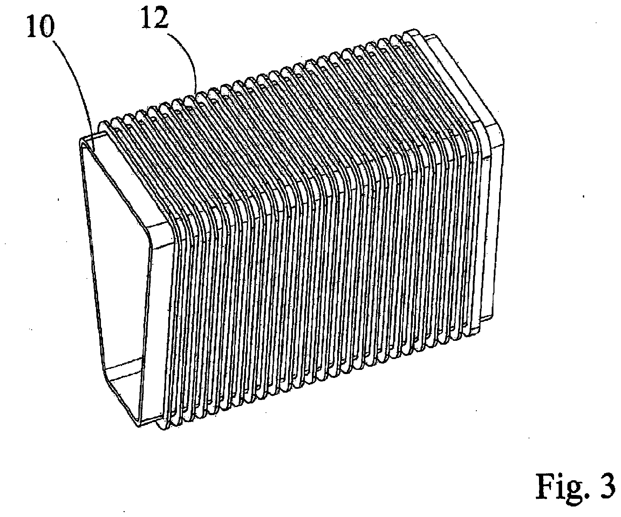

Fig. 3 shows a perspective view of a coil box without wires;

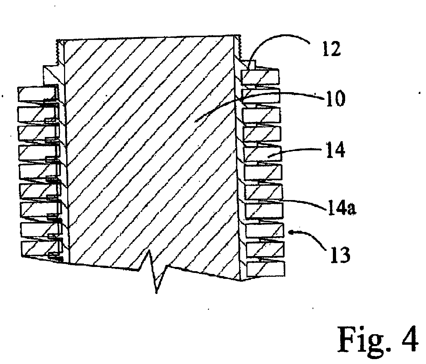

Fig. 4 shows a longitudinal section of the coil box;

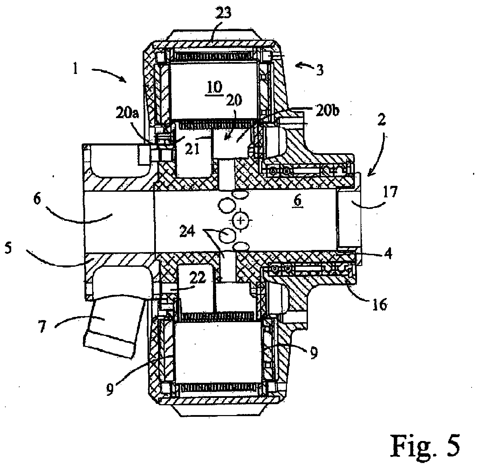

Fig. 5 shows an axial section of the device according to the second embodiment.

### First Embodiment

A cooling assembly of an electric motor **1** with a centric stator **2** and a double-sided rotor **3** is mounted on a shaft **4** of the stator **2.** A flange **5** with a centric hole **6** extending into the shaft **4** of the stator **2** and with a radial tubular connector **7** for a cold air blower is coaxially arranged on the stator **2,** said blower not being shown in figures. The air conduit continues from the tubular connector **7** through a channel **22** into a space **20** between the shaft **4** of the stator **2** and coil boxes **10** which will be described later.

On the stator **2** two annular supports **9** of coil boxes **10** are disposed at a distance. The coil boxes **10** are arranged in cut-outs **11** in both annular supports **9.** The coil boxes **10** are circumferentially provided with helically arranged grooves **12** foreseen for receiving a winding **13** such that wires **14** of the winding **13** are arranged at electrically non-conductive distances.

At their external edge, both rotor **3** parts are connected with a suction turbine **15** which draws cooling air from the motor and diverts it into the ambient.

The hole **6** in the shaft **4** of the stator **2** can be arranged in an output section **16** of the rotor **3** and covered by a cover **17.**

The cooling assembly according to the first embodiment functions as follows: while the motor is running, the blower forces cold air through the tubular connector 7 and further through the channel **22** into the space **20,** from where the air travels into gaps **14a** between the wires **14** of each winding **13,** from where the turbine **15** draws it into the ambient.

### Second Embodiment

The second embodiment solves a further constructional condition, namely that it is not possible to divert the cooling air into the ambient in radial direction directly from the windings **13.**

It differs from the structure according to the first embodiment in that in the space **20** between the shaft **4** of the stator **2** and the coil boxes **10** there is arranged a radially extending separating wall **21** dividing the space **20** into two parts **20a** and **20b.** A channel **22** for conducting cold air from the tubular connector 7 to the space **20** extends past the hole **6** in the shaft **4** of the stator **2** and leads directly into the space part **20a.** At their external edge, both rotor **3** parts are connected with a locking ring **23.** In the area of the space part **20b** arranged opposite the connector **7** boreholes **24** are provided in the shaft **4** of the stator **2.**

The cooling assembly according to the second embodiment functions as follows: pressurized cooling air enters through the connector **7** and the channel **22** into the adjacent part **20a** of the space **20** and continues through the gaps **14a** between the wires **14** of the winding **13** in the area defined by the partition wall **21.** After the air exits the gaps **14a** between the wires **14,** the locking ring **23** directs the air back to pass through the gaps **14a** of the second half of the wires **14** of the winding **13** into the second part **20b** of the space **20,** from where it flows through the boreholes **24** in the shaft **4** of the stator **2** and through the hole **6** on the side of the tubular connector 7 into the ambient.

It goes without saying that a person skilled in the art can design new embodiments by knowing the above disclosure and its embodiments without circumventing the characteristics of the invention, which are defined in the appended claims.

## Claims

1. A cooling assembly of an electric motor **(1)** with a centric stator **(2)** and a double-sided rotor **(3)** mounted on a shaft **(4)** of the stator **(2) characterized in that** a flange **(5)** with a centric hole **(6)** extending into the shaft **(4)** of the stator **(2)** and with a radial tubular connector **(7)** for a cold air blower is coaxially arranged on the stator **(2),** wherein a cooling air channel **(22)** is arranged in the stator **(2)** and led past the hole **(6)** in the shaft **(4)** of the stator **(2)** and leads directly into a space **(20),** wherein on the stator **(2)** two annular supports **(9)** of coil boxes **(10)** are disposed at a distance and the coil boxes **(10)** are arranged in cut-outs (**11**) in both annular supports **(9),** and that the coil boxes **(10)** are circumferentially provided with helically arranged grooves **(12)** foreseen for receiving a winding **(13)** such that wires **(14)** of the winding **(13)** form electrically non-conductive gaps **(14a),** wherein at their external edge, both rotor **(3)** parts are connected with a suction turbine **(15).**

2. Cooling assembly of an electric motor **(1)** with a centric stator **(2)** and a double-sided rotor **(3)** mounted on a shaft **(4)** of the stator **(2) characterized in that a** flange **(5)** with a centric hole **(6)** extending into the shaft **(4)** of the stator **(2)** and with a radial tubular connector **(7)** for a cold air blower is coaxially arranged on the stator **(2),** wherein a cooling air channel **(22)** is arranged in the stator **(2)** and led past the hole **(6)** in the shaft **(4)** of the stator **(2)** and leads directly into a a space **(20)** between the shaft **(4)** of the stator **(2)** and coil boxes **(10),** which space **(20)** is separated by a radially extending separating wall **(21),** dividing the space **(20)** into two axially separated space parts, a fist space part **(20a)** axially arranged towards the tubular connector **(7)** and into which the cooling air channel **(22)** is directed, and a second space part **(20b)** arranged axially towards the opposite tubular connector **(7),** whereas at their external edge, both rotor **(3)** parts are connected with a locking ring **(23)** and in the shaft **(4)** of the stator **(2)** in the area of the part **(20b)** of the space **(20)** arranged opposite the tubular connector **(7)** boreholes **(24)** are provided.

## Patentansprüche

1. Kühlanordnung eines Elektromotors (1) mit zentrischem Stator (2) und doppelseitigem Rotor (3), die auf einer Welle (4) des Stators (2) angebracht ist, **dadurch gekennzeichnet, dass** ein Flansch (5) mit einem in die Welle (4) des Stators (2) verlaufenden zentrischen Loch (6) und mit einem röhrenförmigen Radialverbinder (7) für ein Kaltluftgebläse koaxial am Stator (2) angeordnet ist, wobei ein Kühlluftkanal (22) in dem Stator (2) angeordnet ist und an dem Loch (6) in der Welle (4) des Stators (2) vorbeigeführt ist und direkt in einen Raum (20) führt, wobei am Stator (2) zwei ringförmige Stützen (9) von Spulenkästen (10) in einem Abstand angeordnet sind, und die Spulenkästen (10) in Ausschnitten (11) in beiden ringförmigen Stützen (9) angeordnet sind, und dass die Spulenkästen (10) um den Umfang mit schraubenförmig angeordneten Nuten (12) versehen sind, die zur Aufnahme einer Wicklung (13) vorgesehen sind, so dass Drähte (14) der Wicklung (13) elektrisch nicht leitende Spalte (14a) bilden, wobei beide Rotor(3)-Teile an ihrem Außenrand mit einer Saugturbine (15) verbunden sind.

2. Kühlanordnung eines Elektromotors (1) mit zentrischem Stator und doppelseitigem Rotor (3), die auf einer Welle (4) des Stators (2) angebracht ist, **dadurch gekennzeichnet, dass** ein Flansch (5) mit einem in die Welle (4) des Stators (2) verlaufenden zentrischen Loch (6) und mit einem röhrenförmigen Radialverbinder (7) für ein Kaltluftgebläse koaxial am Stator (2) angeordnet ist, wobei ein Kühlluftkanal (22) in dem Stator (2) angeordnet ist und an dem Loch (6) in der Welle (4) des Stators (2) vorbeigeführt ist und direkt in einen Raum (20) zwischen der Welle (4) des Stators (2) und Spulenkästen (10) führt, wobei der Raum (20) durch eine sich radial erstreckende Trennwand (21) getrennt ist, die den Raum (10) in zwei axial getrennte Raumteile, einen ersten Raumteil (20a), der axial zu dem röhrenförmigen Verbinder (7) hin angeordnet ist und in den der Kühlluftkanal (22) gerichtet ist, und einen zweiten Raumteil (20b), der axial zu dem gegenüberliegenden röhrenförmigen Verbinder (7) hin angeordnet ist, unterteilt, während beide Rotor(3)-Teile an ihrem Außenrand mit einem Sicherungsring (23) verbunden sind und in der Welle (4) des Stators (2) im Bereich des Teils (20b) des Raums (20), der gegenüber dem röhrenförmigen Verbinder (7) angeordnet ist, Bohrlöcher (24) vorgesehen sind.

## Revendications

1. Ensemble de refroidissement d'un moteur électrique (1) avec un stator central (2) et un rotor double face (3) monté sur un arbre (4) du stator (2), **caractérisé en ce qu'**une bride (5) avec un trou central (6) s'étendant dans l'arbre (4) du stator (2) et avec un connecteur tubulaire radial (7) pour une soufflante d'air froid est disposée coaxialement sur le stator (2), un canal d'air de refroidissement (22) étant disposé dans le stator (2) et passant devant le trou (6) dans l'arbre (4) du stator (2) et conduisant directement dans un espace (20), deux supports annulaires (9) de cages à bobines (10) étant disposés sur le stator (2) à une certaine distance et les cages à bobines (10) étant disposées dans des découpes (11) dans les deux supports annulaires (9), et **en ce que** les cages à bobines (10) sont pourvues sur leur circonférence de gorges disposées en forme d'hélice (12) prévues pour recevoir un enroulement (13) de telle sorte que des fils (14) de l'enroulement (13) forment des espaces électriquement non conducteurs (14a), les deux parties du rotor (3) étant connectées au niveau de leurs bords externes à une turbine d'aspiration (15).

2. Ensemble de refroidissement d'un moteur électrique (1) avec un stator central (2) et un rotor double face (3) monté sur un arbre (4) du stator (2), **caractérisé en ce qu'**une bride (5) avec un trou central (6) s'étendant dans l'arbre (4) du stator (2) et avec un connecteur tubulaire radial (7) pour une soufflante d'air froid est disposée coaxialement sur le stator (2), un canal d'air de refroidissement (22) étant disposé dans le stator (2) et passant devant le trou (6) dans l'arbre (4) du stator (2) et conduisant directement dans un espace (20) entre l'arbre (4) du stator (2) et les cages à bobines (10), lequel espace (20) est séparé par une paroi de séparation s'étendant radialement (21) divisant l'espace (20) en deux parties d'espace séparées axialement, une première partie d'espace (20a) étant disposée axialement vers le connecteur tubulaire (7), dans laquelle première partie d'espace est dirigé le canal d'air de refroidissement (22), et une deuxième partie d'espace (20b) étant disposée axialement vers le connecteur tubulaire opposé (7), tandis qu'au niveau de leur bord externe, les deux parties de rotor (3) sont connectées à une bague de verrouillage (23) et des trous de perçage (24) sont prévus dans l'arbre (4) du stator (2) dans la zone de la partie (20b) de l'espace (20) disposée à l'opposé du connecteur tubulaire (7).
